# EUROPÄISCHE PATENTSCHRIFT

(11) **EP 3 210 358 B1**
(45) Veröffentlichungstag und Bekanntmachung des Hinweises auf die Patenterteilung: **03.10.2018**
(21) Anmeldenummer: 15786864.7
(22) Anmeldetag: 15.10.2015
(51) Int. Cl.: H04L 29/08, H04L 29/06

(54) **TELEKOMMUNIKATIONSANORDNUNG UND VERFAHREN ZUM TRAVERSIEREN EINER APPLICATION-LAYER-GATEWAY-FIREWALL BEIM AUFBAU EINER RTC-KOMMUNIKATIONSVERBINDUNG ZWISCHEN EINEM RTC-CLIENT UND EINEM RTC-SERVER**
TELECOMMUNICATIONS ASSEMBLY AND METHOD FOR TRAVERSING AN APPLICATION LAYER GATEWAY FIREWALL DURING THE ESTABLISHMENT OF AN RTC COMMUNICATION CONNECTION BETWEEN AN RTC CLIENT AND AN RTC SERVER
DISPOSITIF DE TÉLÉCOMMUNICATION ET PROCÉDÉ POUR TRAVERSER UN PARE-FEU DE PASSERELLE DE COUCHE D'APPLICATION LORS DE L'ÉTABLISSEMENT D'UNE LIAISON DE COMMUNICATION RTC ENTRE UN CLIENT RTC ET UN SERVEUR RTC

(30) Priorität: 21.10.2014 DE 102014015443
(43) Veröffentlichungstag der Anmeldung: 30.08.2017
(73) Patentinhaber: Unify GmbH & Co. KG, 80807 München (DE)
(72) Erfinder: KLAGHOFER, Karl, 81373 München (DE); STACH, Thomas, 1130 Wien (AT); TOTZKE, Jürgen, 85586 Poing (DE)
(74) Vertreter: Fritzsche, Thomas
(86) Internationale Anmeldenummer: PCT/EP2015/002040
(87) Internationale Veröffentlichungsnummer: WO 2016/062387

(56) Entgegenhaltungen:
- US-B1- 7 570 765
- US-B1- 8 695 077

## Beschreibung

Die vorliegende Erfindung betrifft ein Verfahren gemäß Anspruch 1 zum Traversieren einer Application-Layer-Gateway-Firewall beim Aufbau einer RTC-Kommunikationsverbindung zwischen einem RTC-Client und einem RTC-Server sowie eine Telekommunikationsanordnung gemäß Anspruch 8, mit der das vorgenannte Verfahren ausgeführt werden kann. Außerdem betrifft die vorliegende Erfindung ein entsprechendes Computerprogrammprodukt gemäß Anspruch 6 sowie einen maschinenlesbaren Datenträger gemäß Anspruch 7, auf dem das Computerprogrammprodukt gespeichert ist.

Die vorliegende Erfindung betrifft ganz allgemein das Traversieren einer Application-Layer-Gateway-Firewall (nachfolgend in der Regel kurz mit "Firewall" bezeichnet), mit anderen Worten das Durchschleusen von Datenpaketen durch eine solche Firewall, beispielsweise für eine Kommunikation gemäß Voice over IP (VoIP) oder Video over IP. Diese Kommunikationsarten gehören zur sogenannten Real-time-Transport-Protocol-Kommunikation (RTP-Kommunikation). Die nachfolgende Beschreibung geht ohne Beschränkung der Allgemeinheit von einem speziellen Anwendungsfall dieser RTC-Kommunikation (RTC = Real Time Communications) aus, nämlich der WebRTC-Kommunikation, die über einen Webbrowser erfolgt.

Firewalls sind seit jeher eine Hürde für die Übermittlung von Kommunikation über VolP oder Video over IP. Grund dafür sind die in VolP-Standards (H.323, SIP[RFC3261], ...) dynamisch ausgehandelten UDP-Port-Nummern (User Datagram Protocol) für die RTP-Sprach- oder Videopakete (RTP = Real-Time Transport Protocol, vgl. [RFC3550]).

Mit präzise spezifizierten Standard-Signalisierungsprotokollen (H.323/H.245 (H.323 benutzt H.245 zum Aushandeln der Mediendaten), SIP/SDP (Session Initiation Protocol/Session Description Protocol), XMPP/Jingle (Extensible Messaging and Presence Protocol), MGCP (Media Gateway Control Protocol) [RFC3435], etc.) haben Firewall-Hersteller die Möglichkeit, durch Implementierung bestimmter Protokollanteile (jener Signalisierungsanteile, die für die Verhandlung der UDP-Portnummern relevant sind) dynamisch mitzulesen. Damit wird die Firewall in die Lage versetzt, die dynamisch ausgehandelten UDP-Ports für die zu übertragenden Sprach-/Video-RTP-Pakete zu öffnen und zu schließen. Dieses bekannte Prinzip wird auch als Firewall Application Layer Gateway (= ALG-Firewall, nachstehend auch kurz Firewall) bezeichnet.

Aufgrund der Tatsache, dass das Signalisierungsprotokoll für WebRTC nicht standardisiert ist, kann jeder Hersteller sein eigenes, proprietäres Protokoll verwenden, oder er kann alternativ auf bekannten Protokollen aufbauen. Schlussendlich haben die Hersteller von ALG-Firewalls aber das Problem, dass sie nicht auf ein festes Signalisierungsprotokoll bauen können, wie dies beispielsweise bei SIP/SDP der Fall wäre, und dies somit auch nicht inspizieren können, um die Port-Informationen in den Signalisierungsnachrichten zu finden.

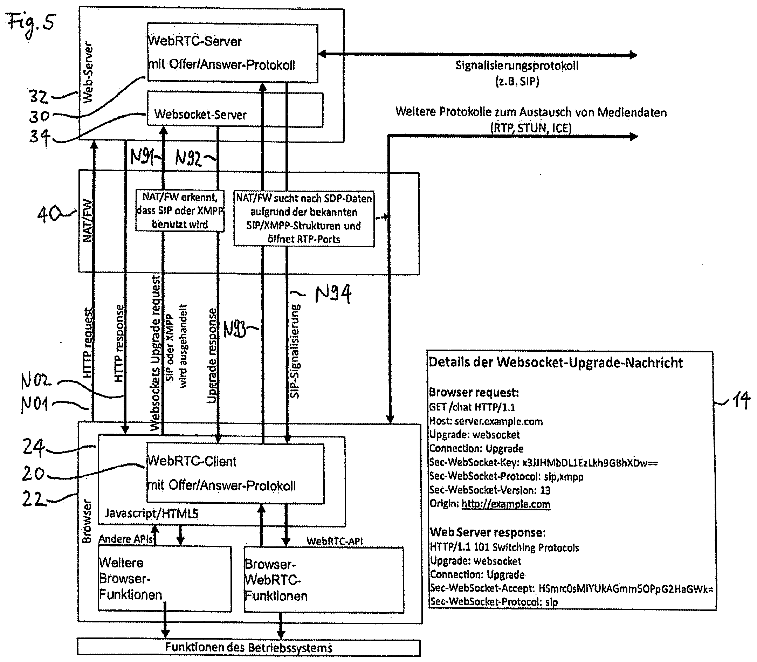

Für ein besseres Verständnis soll nachstehend kurz anhand von Fig. 5 das Traversieren einer ALG-Firewall skizziert werden, wie es bisher für "SIP über WebSockets" möglich ist. Zunächst schickt ein Browser 22 eine Nachricht N01 "HTTP request" an einen Web-Server 32, die dieser mit einer Nachricht N02 "HTTP response" an eine Funktionseinheit 24 (für JavaScript/HTML5) beantwortet, wodurch eine HTTP-Verbindung hergestellt wird. Bei einer Upgrade-Prozedur, genauer gesagt, bei der Nachricht N91, die der WebRTC-Client 20 an den WebSockets-Server 34 als "WebSockets Upgrade Request" von der HTTP-Verbindung auf eine WebSockets-Verbindung schickt, wird die Verwendung von SIP zwischen dem WebRTC-Client 20 und dem WebSockets-Server 34 ausgehandelt. Daher erkennt die Firewall 40, dass SIP benutzt wird. Hier ist es natürlich möglich, auch andere standardisierte Protokolle auszuhandeln, wie z. B XMPP (XMPP verwendet kein SDP, sondern Jingle. Das Jingle ist die entsprechende XMPP-Erweiterung, die RTC erlaubt.), H.323, MGCP. Nach dem Empfang einer Upgrade-Antwort als Nachricht N92 vom WebSockets-Server 34 schickt der WebRTC-Client 20 eine Nachricht N93 an den WebRTC-Server 30, worauf die Firewall 40 nach SDP-Daten aufgrund der bekannten SIP/XMPP-Strukturen sucht und die entsprechenden RTP-Ports öffnet. Diese Vereinbarung wird mit einer entsprechenden Nachricht N94 vom WebRTC-Server 30 an den WebRTC-Client 20 mit einer SDP-Antwort quittiert. Anschließend können Mediendaten ausgetauscht werden, indem weitere Protokolle, wie zum Beispiel RTP (Real-time Protocol), STUN (Session Traversal Utilities for NAT, NAT = Network Address Translation), ICE (Interactive Connectivity Establishment), verwendet werden.

Das WebSockets-Protokoll enthält optional ein Feld, welches das verwendete Signalisierungsprotokoll (hier im Beispiel SIP) identifiziert. Dies ist unter anderem in einem Infokasten 14 unter "Browser Request" und "Web-Server Response" dargelegt.

Das Problem mit WebRTC in diesem Zusammenhang ist, dass das Signalisierungsprotokoll für WebRTC nicht standardisiert ist. D.h., es obliegt jedem WebRTC-Server, wie er die Signalisierungskommunikation mit seinem WebRTC-Client handhabt. Durch diesen proprietären Signalisierungsansatz bei WebRTC ist es den Firewall Herstellern nicht möglich, allgemeine ALG-Firewall-Lösungen für das Traversieren bzw. Durchqueren von Firewalls, das sogenannte WebRTC Traversal zu realisieren. Dies kann zu Problemen beim Ausrollen von WebRTC-Lösungen führen.

WebRTC befindet sich erst am Anfang der kommerziellen Anwendung. Es kann jedoch davon ausgegangen werden, dass WebRTC eine dominante Technologie für Webbasierte Echtzeitkommunikation werden wird.

Es sind mehrere Firewall-Techniken für WebRTC bekannt, die diskutiert werden für Firewall Traversal für WebRTC:
a. So wie für SIP oder H.323, können auch für WebRTC bestimmte UDP-Portbereiche in der Firewall permanent geöffnet werden. Dies ist für Unternehmen mit restriktiven Sicherheitsanforderungen oft jedoch nicht gewünscht.
b. HTTP (Hypertext Transfer Protocol) Tunneling: Firewalls haben meist einen Port immer offen. Dies ist der TCP-Port 80 (TCP = Transmission Control Protocol), über den auch der HTTP-Datenverkehr [vgl. RFC2616] läuft (TCP/http-Port). Die Idee ist, einen TCP-Tunnel zwischen dem WebRTC-Client und einem TURN-Server (Traversal Using Relays around NAT, NAT = Network Address Translation, vgl. RFC5766] auf der anderen Seite der Firewall aufzubauen ("TURN access via TCP") und diesen zu nutzen, um UDP/RTP-Sprach/Videopakete und Datenpakete durch die Firewall zu schleusen. Manche Firewalls/Unternehmen sind so restriktiv, dass sie HTTP-Verkehr nicht von jedem beliebigen Client akzeptieren, sondern nur von einem bestimmten internen Server kommend (HTTP-Proxy). In diesem Fall muss der WebRTC-Browser mittels der bekannten HTTP-CONNECT-Methode [RFC2817] den HTTP-Proxy beauftragen, den oben genannten TCP-Tunnel durch die Firewall aufzubauen, um diesen später für das TURN-Protokoll zu nutzen. In einer weiteren Ausprägung der aktuellen Diskussionen in beispielsweise IETF kann ein "TURN over WebSockets"-Tunnel durch die Firewall verwendet werden [draft-chenxin-behave-turn-WebSocket].
   Diese Lösung des HTTP Tunnelings ist grundsätzlich möglich, erfordert jedoch die Erfüllung diverser Voraussetzungen, um eine durchgehende Anwendung zu ermöglichen. Es muss sichergestellt sein, dass
   - der WebRTC-Client (Browser) die beschriebenen Merkmale implementiert hat (z.B. HTTP CONNECT). Diesbezüglich besteht eine Abhängigkeit vom Browserhersteller (Google, Microsoft, Mozilla, ..). Für mobile WebRTC-Clients wie Smartphones, Tablets (native WebRTC-App) muss derzeit das Verfahren selbst implementiert werden.
   - das Unternehmen die erforderliche Infrastruktur aufgesetzt hat und unterstützt (HTTP-Proxy),
   - der WebRTC-Lösungsanbieter einen TURN-Server als Teil seiner Lösung hinter der Firewall eingerichtet hat.
c. Firewall/Port Control Protocol [RFC6887] (z.B. Cisco). Die Idee ist, dass der WebRTC-Client, bevor er ein Sprach- oder Videopaket sendet, der Firewall per eigenem Protokoll einen Auftrag gibt, einen bestimmten UDP-Port zu öffnen. Firewall-Control-Protokolle sind seit ca. 2003 bekannt. In der Praxis hat sich dieser Ansatz jedoch bisher nicht durchgesetzt, was unter anderem mit Bedenken hinsichtlich Sicherheit, Authentifizierung, Autorisation zu begründen ist. Unternehmen (CIO, IT-Abteilung) wollen meist nicht ihre Firewalls durch eine Menge an Clients oder Server "steuern" lassen.
d. Port Multiplexing: Bei diesem Ansatz können mehrere oder alle RTP-Streams eines WebRTC-Calls (z.B. alle Audio- und Video-Streams eines Calls) bis hin zu sämtlichen RTP-Streams mehrerer oder aller Calls des gesamten Systems über einen einzigen UDP-Port übertragen werden. Dieser Ansatz lindert das Firewall-Port-Problem, indem weniger Port-Ressourcen benötigt werden, löst aber nicht das Grundproblem, die restriktive Firewall zunächst zu überwinden. Des Weiteren wird nicht jeder Hersteller von WebRTC-Clients oder -Servern Port-Multiplexing im Zusammenspiel mit SIP/XMPP/H.323-basierten Systemen unterstützen (optional). Port Multiplexing ist insbesondere eine Option für Hersteller von WebRTC-Lösungen mit großen bis hin zu sehr großen Skalierungsanforderungen (z.B. Public, Residential Services, z.B. Google, ...)

Aus der US 8695077 B1 ist ein Verfahren zum Einrichten und Kontrollieren einer Kommunikationssitzung zwischen SIP-Geräten und Web-basierten Anwendungsservern bekannt. Das Verfahren umfasst das Traversieren einer Application-Layer-Gateway-Firewall unter Verwendung eines RTC-Signalisierungsprotokolls, bei welchem verhandelt wird, welche Ports der Firewall von Client und Server für die auszutauschenden Datenpakete benötigt werden.

Die US 7570765 B1 beschreibt ein Secure Real-time Transport Protocol-on-the-fly (SRTPoF). Das Verfahren betrifft die Protokollverhandlung zwischen Voice-over-Internet-Protocol-Geräten.

Der Erfindung liegt somit die Aufgabe zugrunde, die vorstehend genannten Nachteile zu überwinden und ein Verfahren zum Traversieren einer Firewall vorzuschlagen, das einerseits allen Sicherheitsanforderungen genügt und andererseits einfach zu handhaben ist. Ferner liegt der Erfindung die Aufgabe zugrunde, eine entsprechende Telekommunikationsanordnung vorzuschlagen, mit der das Verfahren ausgeführt werden kann.

Diese Aufgabe wird gelöst mit einem - üblicherweise computerimplementierten - Verfahren gemäß Anspruch 1, einem Computerprogramm bzw. Computerprogrammprodukt gemäß Anspruch 6, einem maschinenlesbaren Datenträger gemäß Anspruch 7, auf dem das Computerprogrammprodukt gespeichert ist, sowie mit einer Telekommunikationsanordnung gemäß Anspruch 8. Vorteilhafte Weiterbildungen der Erfindung sind Gegenstand der abhängigen Ansprüche.

Erfindungsgemäß verhandeln der RTC-Client und der RTC-Server dann, wenn eine RTC-Kommunikationsverbindung aufgebaut werden soll, was beispielsweise beim Öffnen einer Webseite über einen HTTP-Request erfolgt, unter Verwendung eines proprietären (also nicht-standardisierten) RTC-Signalisierungsprotokolls darüber, welche der Ports der ALG-Firewall benötigt werden, um die Datenpakete übertragen zu können, die für die RTC-Kommunikationsverbindung erforderlich sind, indem sie im Kontext, also als Bestandteil, des proprietären RTC-Signalisierungsprotokolls mindestens ein standardisiertes Nachrichtenelement verwenden, mit dem diejenigen Informationen auffindbar sind, welche die zu verwendenden Ports betreffen. Die Firewall besitzt keine spezifischen Kenntnisse des proprietären RTC-Signalisierungsprotokolls und erfasst beim Aufbau der RTC-Kommunikationsverbindung unter Verwendung des standardisierten Nachrichtenelements, welche der Ports der Firewall von dem RTC-Client und dem RTC-Server ausgehandelt wurden, also für nötig befunden wurden, um die über die RTC-Kommunikationsverbindung auszutauschenden Datenpakete übertragen zu können. In anderen Worten kann die Firewall "mithören", welche Ports benötigt werden, und somit kann die Firewall die benötigten Ports nach Maßgabe des Ergebnisses der Verhandlung zwischen RTC-Client und RTC-Server dynamisch öffnen und schließen.

Ein Nachrichtenelement in einem Kommunikationsprotokoll ist ein syntaktischer Abschnitt einer oder mehrerer Signalisierungsnachrichten, in der eine Information kodiert ist, die in Netzwerkkomponenten und/oder Endgeräten eines Kommunikationsnetzes im Rahmen vermittlungstechnischer Prozesse ausgewertet wird. Bei Nachrichtenelementen werden standarisierte Elemente und Hersteller-spezifische (proprietäre) Elemente unterschieden; Letztere sind für die Basisfunktionen des Kommunikationsnetzes nicht essentiell und werden üblicherweise von Netzwerkkomponenten und/oder Endgeräten anderer Hersteller ignoriert. Das erfindungsgemäße standarisierte Nachrichtenelement beinhaltet die identifizierenden Informationen über die Verbindungen, die für die Übermittlung von Mediendaten vom und zum Endgerät aufgebaut werden und entsprechend von der Firewall, z.B. durch Portfreigaben, in Sende- und Empfangsrichtung durchgeleitet werden müssen. Weitere Erläuterungen zu solchen Nachrichtenelementen sind aus EP 1 317 150 A2 zu entnehmen.

Das erfindungsgemäße Verfahren löst somit das zugrundeliegende Problem in anderen Worten dadurch, dass als Bestandteil des RTC-Signalisierungskanals eine Erweiterung verwendet wird, die es der Firewall ermöglicht, beim RTC-Verbindungsaufbau mitzuhorchen, welche Ports bzw. UDP-Ports für die austauschenden Sprach- und/oder Videopakete dynamisch verhandelt werden, und damit die entsprechenden UDP-Ports für den RTP-Verkehr dynamisch zu öffnen und zu schließen. Der genannte Kontext kann dabei während des Aufbaus des RTC-Signalisierungskanals, während der RTC-Signalisierung oder im Anschluss an die RTC-Signalisierung in Form eines zusätzlichen Feldes geschaffen werden, das Informationen enthält, die zum späteren Auffinden der RTP-Ports in den Signalisierungsnachrichten verwendet werden. Die Festlegung bzw. Standardisierung jener Erweiterung, die den Kontext zum RTC Signalisierungsanteil definiert, der bei Mitlesen durch eine Firewall ausreicht, um die UDP/RTP-Portsteuerung, also das Öffnen und Schließen, zu ermöglichen, wird im Folgenden auch als WebRTC-Signalisierung oder auch kurz als WebRTCSig bezeichnet.

Das erfindungsgemäße Verfahren bietet somit mehrere Vorteile:
- Es ist keine Implementierung von Firewall-Control-Protokollen erforderlich, die hohe Hürden hinsichtlich der Sicherheitsanforderungen darstellen würden;
- es müssen keine Ports oder sogar Bereiche von Ports in der Firewall permanent offengehalten werden, was aus Sicherheitsgründen bedenklich sein könnte. Hierzu ist anzumerken, dass die Verwendung von Port-Multiplexing-Techniken, bei denen mehrere oder alle UDP-Streams über einen einzigen UDP-Port übertragen werden, voraussichtlich künftig primär von Herstellern großskalierender Lösungen unterstützt wird;
- bei Szenarien, bei denen eine Lösung auf der Basis von HTTP-Tunneling nicht angewendet werden kann, ist das erfindungsgemäße Verfahren eine relativ einfach und dennoch sicher zu realisierende Alternative, die eine starke Verbreitung von WebRTC signifikant fördern kann; durch Verwendung der vorliegenden Erfindung können beispielsweise Firewall-Lösungen realisiert werden, um insbesondere für bestimmte WebRTC-Anwendungen eine durchgehende Lösung anbieten zu können;
- die erfindungsgemäße Lösung kann außerdem in einfacher Weise standardisiert werden, beispielsweise über IETF, so dass eine generische Implementierung realisiert werden kann, die offen ist für alle Hersteller von WebRTC-basierten Lösungen und von WebRTC-Firewalls.

Im Falle der Verwendung von Secure WebSockets Protocol (WSS) - das heißt eine WebSockets-Verbindung über TLS (Transport Layer Security) - kann die Firewall die in der WSS-Verbindung enthaltenen höheren WebRTC-Signalisierungsanteile nicht ohne weiteres lesen, wobei für dieses Problem beispielsweise die Verwendung eines TLS-Hop-by-Hop-Kontextes als Lösungsansatz dienen kann, wie es ähnlich bei Session Border Controllern (SBCs) durchgeführt wird. Die ALG-Firewall schließt TLS ab, das heißt, eine Verschlüsselung erfolgt nur bis zur bzw. ab der Firewall. TLS ist ohnehin nur Hop-by-Hop. Die ALG-Firewall hat somit eine TLS-Beziehung einerseits zum WebRTC-Client (oder Proxy) auf der einen Seite der ALG-Firewall und eine andere TLS-Beziehung mit dem WebRTC-Server (oder Access Node) auf der anderen Seite der ALG-Firewall.

Gemäß einer vorteilhaften Weiterbildung der Erfindung wird für die Verhandlung der benötigten Ports, also das Austauschen der Informationen und Parameter hinsichtlich RTC-Signalisierung, zwischen dem RTC-Client und dem RTC-Server einer von vorab definierten (willkürlich nummerierten) Signalisierungstypen verwendet, der nach dem initialen Aufbau einer HTTP-Verbindung zwischen dem RTC-Client und dem RTC-Server mittels eines sogenannten "WebRTCSig-Handshake" ausgetauscht wird. Hierbei besteht eine vorteilhafte Ausgestaltung darin, dass der WebRTCSig-Handshake als Teil einer Upgrade-Prozedur von einer HTTP-Verbindung auf eine WebSockets-Verbindung ausgeführt wird und einen Kontext zur RTC Signalisierung herstellt. Hierfür sind gegebenenfalls Erweiterungen im WebSockets-Protokoll erforderlich, wofür beispielsweise ein spezielles bzw. definiertes - in der Regel zusätzliches - Feld in einem Header eingesetzt wird. Alternativ hierzu kann der WebRTCSig-Handshake auch erst dann stattfinden, nachdem die HTTP-Verbindung auf eine WebSockets-Verbindung umgestellt (bzw. upgegraded) wurde, was mittels eines eigenen Protokolls durchgeführt wird, das vorzugsweise nur wenige zusätzliche Bytes umfasst und auch als "Thin Layer Protocol" bzw. "WebRTCSig Over WebSockets" bezeichnet wird. Bezüglich der letztgenannten Alternative des WebRTCSig-Handshake erst nach der Upgrade-Prozedur bietet die erstgenannte Alternative des WebRTCSig-Handshake als Teil der Upgrade-Prozedur den Vorteil, dass zeitlich ein Roundtrip eingespart wird. Hinsichtlich des genauen Zeitpunkts bzw. des Timings findet der WebRTCSig-Handshake beispielsweise statt, nachdem der RTC-Client das JavaScript (JS-Client) vom RTC-Server geladen hat.

Die eigentliche WebRTCSig-Information kann je nach verwendetem RTC-Signalisierungsprotokoll beispielsweise die folgenden Varianten von Signalisierungsprotokollen umfassen:
1) WebRTCSig Typ 1 = SIP und SDP over WebSockets
2) WebRTCSig Typ 2 = XMPP und Jingle over WebSockets
3) WebRTCSig Typ 3 = "Proprietary WebSockets Signalling with SDP Embedded (Offset)" D.h., WS-Signalisierungsmeldungen (WS = WebSockets) mit SDP-Protokoll-Nachrichten (z.B. WS Setup mit SDP Offer; WS Connect mit SDP Answer). Damit die Firewall den Anfang der SDP-Offer/Answer-Nachricht findet, kann/muss hierzu ein Offset-Wert mitgegeben werden, der den Beginn der SDP-Offer-Nachricht adressiert. Hierzu ist anzumerken, dass sich SDP als Session Signalling aus zwei Gründen anbietet:
   a) Die WebRTC-Browser-API (in W3C = World Wide Web Consortium standardisiert) in Version 1 ist SDP-basiert.
   b) SDP ist das Session-Description-Protokoll auch in SIP.
   Als beispielhaftes standardisiertes Nachrichtenelement ist im RFC 3264 das Offer-Answer-Modell angegeben mit der Zeile "m=video 53000 RTP/AVP 32", welche besagt, dass Video über den Port 53000 übertragen werden soll.
   SDP erleichtert somit einerseits das Zusammenwirken mit der SIP-Welt und andererseits das Client-seitige Zusammenwirken zwischen Session Signalling und WebRTC-API.
   Wenn ein Hersteller ein proprietäres Signalisierungsprotokoll verwendet, wird er sehr wahrscheinlich trotzdem SDP mit den proprietären Nachrichten verwenden, weil die WebRTC-API ebenfalls SDP verwendet. Beim erfindungsgemäßen WebRTCSig-Typ 3 würde beispielsweise als Zusatzinformation mitsignalisiert werden, dass die ALG-Firewall bei Byte 77 starten soll und als SDP-Protokoll zu interpretieren ist (weil das ja wiederum standardisiert ist). Alles das, was sich davor befindet, also bis zu Byte 76 einschließlich, ist Teil der "proprietären Setup-Nachricht".
   Alternativ könnte der Browser das SDP der WebRTC-API auch auf etwas anderes mappen - z.B. H.245, Jingle oder ein proprietäres Format - und zur RTC-Signalisierung verwenden. Dies würde dann durch einen anderen WebRTCSig-Typ gekennzeichnet werden. Diese Variante entspricht einer vorteilhaften Weiterbildung des erfindungsgemäßen Verfahrens, wonach ein Signalisierungsprotokoll mit einer Signalisierungsmeldung verwendet wird, bei der eine Session-Description-Protocol-Offer-Nachricht mit eingebettetem Offset verwendet wird, wobei der Offset den Beginn dieser Nachricht adressiert.
4) WebRTCSig Typ 4 = Explizites SDP-Protokoll
   Man könnte explizit das SDP-Protokoll für WebRTC standardisieren.
5) WebRTCSig Typ 5 = Verhandelte Ports mit erfindungsgemäßer, vordefinierter und kommunizierter Syntax
6) WebRTCSig Typ 6 = Verhandelte Ports in RESTful-Style (REST = Representational State Transfer): bekannter URI (Uniform Resource Identifier) mit definierter (Sub-)Struktur, welche die Ports enthält.
7) WebRTCSig Typ 7 = Verhandelte Ports in RESTful Style: bekannter URI, der einen Pointer bzw. Zeiger aufweist, der auf eine Ressource (Server) zeigt, von wo die Ports zu erhalten sind.
   Diese beiden letztgenannten Varianten wiederum entsprechen einer vorteilhaften Weiterbildung des erfindungsgemäßen Verfahrens, wonach in RTC-Signalisierungsmeldungen die ausgehandelten Ports im RESTful-Style definiert werden.
8) WebRTCSig Typ 8 = Ein Textstring wird als Parameter eingefügt, der den Start von SDP in den Signalisierungsnachrichten kennzeichnet. Der Textstring als solches ist beliebig, er sollte nur nicht im Rest der Nachricht nochmals vorkommen.

Die der Erfindung zugrundeliegende Aufgabe wird außerdem gelöst mit einer Telekommunikationsanordnung, die zumindest einen RTC-Client, zumindest einen RTC-Server und zumindest eine Firewall mit einer Mehrzahl von Ports aufweist. Erfindungsgemäß weist die Firewall eine Steuereinrichtung auf, die so ausgestaltet ist, dass das vorstehend beschriebene Verfahren ausgeführt werden kann.

Ferner werden ein Computerprogrammprodukt zur Durchführung des vorstehend erläuterten Verfahrens sowie ein maschinenlesbarer Datenträger, auf dem ein solches Computerprogrammprodukt gespeichert ist, als zur vorliegenden Erfindung gehörig angesehen.

IETF wird nach derzeitigem Verständnis nicht das komplette WebRTC-Signalisierungsprotokoll standardisieren, wie es beispielsweise für SIP oder H.323 gemacht wurde. Eine ALG-Firewall muss daher die WebRTC-Signalisierungsprotokolle aller Hersteller von WebRTC-Applikationen implementieren, wenn es in allen Umgebungen dynamisch die Signalisierungsprotokolle verstehen muss, um die ausgehandelten UDP-Ports zu finden, auf denen die eigentlichen RTP-Pakete gesendet werden. Dies kann vermieden werden, indem die gewählten Signalisierungsprotokolle in Kategorien gruppiert (also beispielsweise willkürlich nummeriert) werden. Wenn die ALG-Firewall erfasst bzw. mitliest, dass es sich um einen WebRTC-Signalisierungstyp 1 handelt, dann weiß sie, dass sie nach SIP/SDP parsen muss. Wenn die ALG-Firewall dagegen mitliest, dass der WebRTC-Signalisierungstyp 3 mit Offset 77 verwendet wird, dann weiß die ALG-Firewall, dass sie die Nachricht ab Byte 77 als SDP-Protokoll parsen muss etc. Der WebRTC-Signalisierungstyp 4 wäre dann ein SDP-Protokoll ab Byte 1. Ein WebRTC-Signalisierungstyp 5 plus expliziter Source- und Destination-UDP-Port-Angabe würde der ALG-Firewall exakt die UDP-Ports mitteilen, wobei in diesem Fall kein SDP-Protokoll verwendet wird.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine schematische Übersicht über eine Ausführungsform einer erfindungsgemäßen Telekommunikationsanordnung,
- Fig. 2 bis 4: schematische Ablaufpläne für drei Ausführungsformen des erfindungsgemäßen Verfahrens zum Traversieren einer Firewall und
- Fig. 5: einen schematischen Ablaufplan für ein bereits bekanntes Verfahren zum Traversieren einer Firewall.

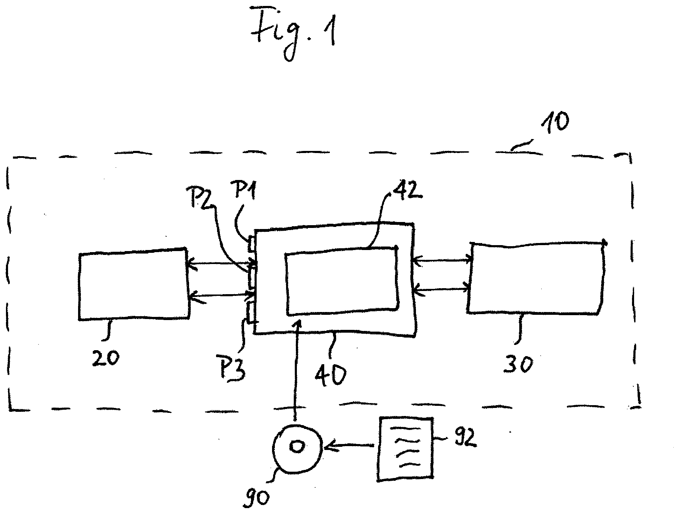

Die in Fig. 1 dargestellte Telekommunikationsanordnung 10 gemäß der vorliegenden Erfindung umfasst einen RTC-Client 20, einen RTC-Server 30 und eine Firewall 40. Der Austausch von Nachrichten zwischen der Firewall 40 mit dem Client 20 einerseits und dem Server 30 andererseits ist durch einige wenige Pfeile symbolisiert. Außerdem ist schematisch dargestellt, dass die Firewall 40 mehrere Ports aufweist, die rein schematisch mit P1, P2 und P3 bezeichnet sind. Die Firewall 40 enthält eine Steuereinrichtung 42, beispielsweise eine CPU oder eine Prozessorgruppe, welche die Funktionen der Firewall 40 implementiert. Schematisch ist außerdem eine CD-ROM 90 als Beispiel für einen Datenträger angegeben, auf dem ein Computerprogramm bzw. Computerprogrammprodukt 92 gespeichert ist, wobei der Datenträger 90 mit dem entsprechenden Computerprogramm 92 der Steuereinrichtung 42 zur Verfügung gestellt wird, um das erfindungsgemäße Verfahren zu implementieren.

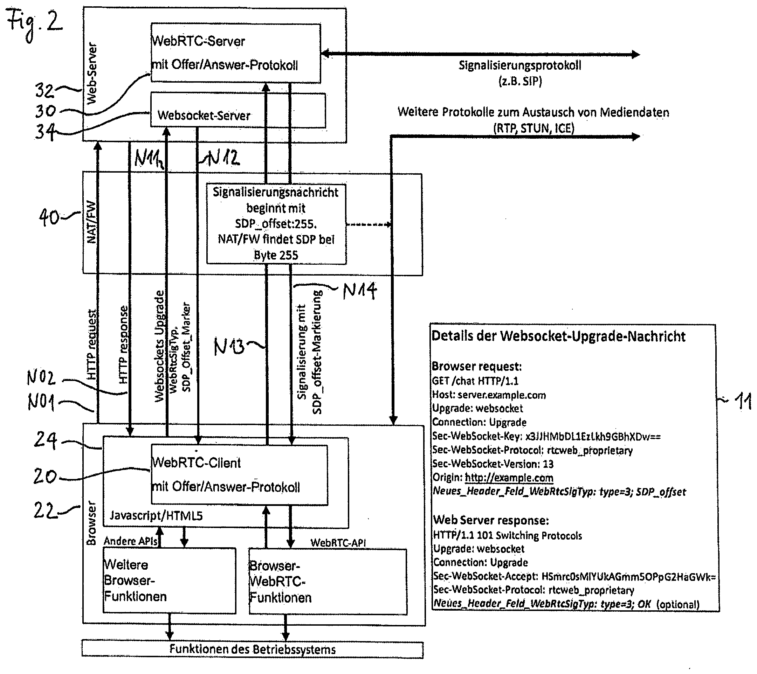

Fig. 2 stellt eine erste Ausführungsform des erfindungsgemäßen Verfahrens zum Traversieren einer Firewall dar, mit dem ein RTC-Signalisierungstyp 3 gemäß obiger Erläuterung implementiert wird. Zunächst schickt ein Browser 22 eine Nachricht N01 "HTTP request" an einen Web-Server 32, die dieser mit einer Nachricht N02 "HTTP response" an eine Funktionseinheit 24 (für JavaScript/HTML5) beantwortet, wodurch eine HTTP-Verbindung hergestellt wird. Danach schickt die Funktionseinheit 24 im Zuge einer WebSockets-Upgrade-Prozedur eine entsprechende Nachricht N11 an einen WebSockets-Server 34 im Web-Server 32, wobei die Nachricht N11 den WebRTC-Signalisierungstyp und einen SDP_Offset-Marker enthält. Der WebSockets-Server 34 bestätigt gegenüber dem WebRTC-Client 20 die Upgrade-Prozedur mit einer Nachricht N12. Schließlich schickt der WebRTC-Client 20 an den WebRTC-Servereine Nachricht N13, welche die Information beinhaltet, dass die Signalisierungsnachricht mit einem SDP-Offset von 255 beginnt. Somit findet die Firewall 40 das SDP bei Byte 255. Durch eine entsprechende Nachricht N14 vom WebRTC-Server 30 an den WebRTC-Client 20 - die beide ein Offer/Answer-Protokoll verwenden - wird eine Signalisierung mit einer SDP_Offset-Markierung abgeschlossen. Durch diese Art der Signalisierung kann die Firewall 40 "mitlesen", wo die für sie relevante Information (hier ab Byte 255) zu finden ist. Diese Information wird in einem neuen Header-Feld übermittelt, in dem der Typ und der SDP_Offset angegeben ist, wie in einem Infokasten 11 unter der Überschrift "Browser Request" als letzte Zeile vermerkt ist. Wie im Infokasten 11 unter der Überschrift "Web Server response" in der letzten Zeile dargelegt ist, bestätigt der WebRTC-Server 30 dem WebRTC-Client 20, dass der ausgehandelte Signalisierungstyp die Nr. 3 ist, und gibt mit "OK" zu erkennen, dass die Signalisierung mit der ausgehandelten SDP_Offset-Markierung erfolgt.

Die übrigen, in Fig. 2 dargestellten Bezeichnungen entsprechen den üblichen Bezeichnungen in diesem technischen Bereich und brauchen daher nicht gesondert erläutert zu werden.

Nach erfolgreichem Abschluss der Signalisierung können Mediendaten durch die Firewall 40 hindurch übertragen werden, wozu weitere Protokolle wie beispielsweise RTP (Real-time Protocol), STUN (Session Traversal Utilities for NAT, NAT = Network Address Translation), ICE (Interactive Connectivity Establishment) verwendet werden.

Wie bereits erwähnt, wird erfindungsgemäß der Typ der WebRTC-Signalisierung übermittelt (in diesem Beispiel hat der Typ die - willkürlich vergebene - Nr. 3), und an der Stelle mit der Bezeichnung SDP_Offset befindet sich ein Textstring, der einen Zeiger bzw.

Pointer zum SDP in den Signalisierungsnachrichten kennzeichnet. Der Textstring als solches ist beliebig, er sollte nur nicht im Rest der Nachricht nochmals vorkommen. Anstatt der im Beispiel angegebenen Bezeichnung "SDP_Offset" könnte beispielsweise auch eine zufällige Zeichenfolge ausreichender Länge dieser Anforderung genügen.

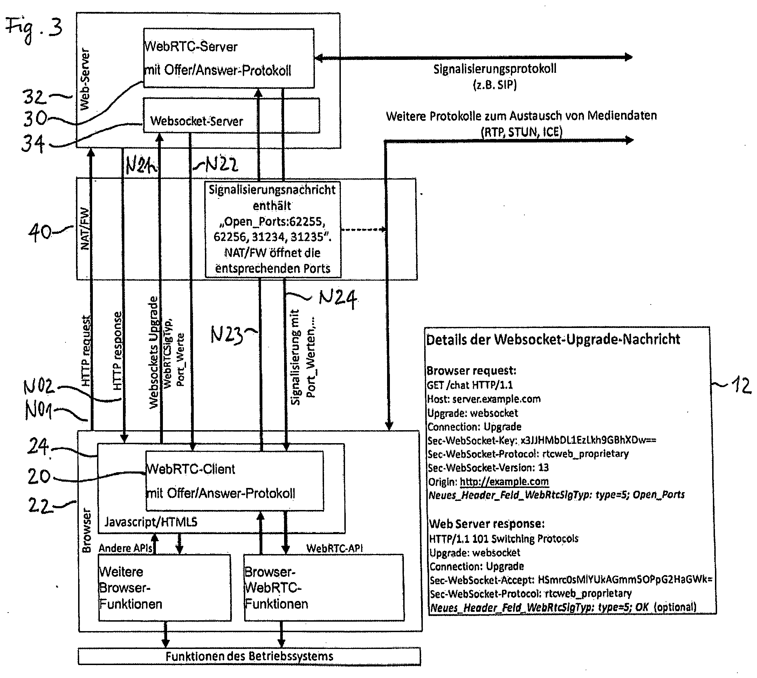

Eine zweite, in Fig. 3 dargestellte, Ausführungsform des erfindungsgemäßen Verfahrens unterscheidet sich von der ersten Ausführungsform dadurch, dass bei der Upgrade-Prozedur auf die WebSockets-Verbindung mit den Nachrichten N21 und N22 ein anderer Signalisierungstyp (in diesem Beispiel: 5) sowie die Port-Werte übertragen werden, welche die Firewall 40 öffnen soll. In anderen Worten enthält die Signalisierungsnachricht N23 die Komponenten, die in diesem Beispiel mit "Open_Ports: 62255, 62256, 31234, 31235" bezeichnet sind, und es folgt eine Bestätigungsnachricht N24. Dementsprechend öffnet die Firewall 40 die entsprechenden Ports. Bei dem neuen Header-Feld wird somit der Signalisierungstyp Nr. 5 sowie die Angabe "Open_Ports" eingetragen. An letzterer Stelle befindet sich ein Textstring, der die RTP-Ports für die Medien in den Signalisierungsnachrichten kennzeichnet. Der Textstring ist als solcher zwar beliebig, er sollte jedoch nicht im Rest der Nachricht nochmals vorkommen. Anstatt dem im Infokasten 12 unter der Überschrift "Browser Request", letzte Zeile angegebenen Beispiel "Open_Ports" könnte beispielsweise auch eine zufällige Zeichenfolge ausreichender Länge dieser Anforderung genügen. In entsprechender Weise enthält die Antwort des WebRTC-Servers 30 an den WebRTC-Client 20 die Bestätigung des ausgehandelten Signalisierungstyps der Nr. 5 sowie eine (optionale) Bestätigung, dass die Ports geöffnet wurden (vergleiche ebenfalls Infokasten 12). Somit wird eine Signalisierung mit den Port-Werten durchgeführt.

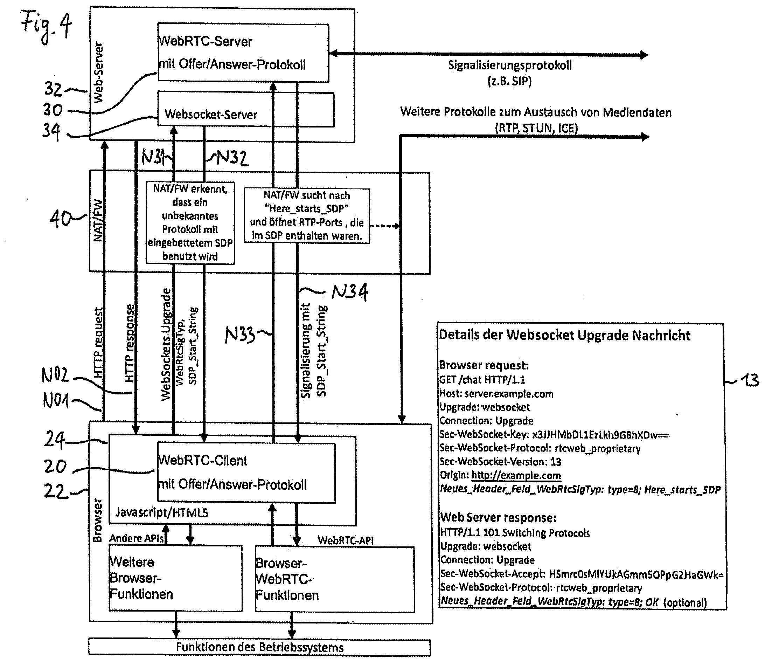

Eine in Fig. 4 dargestellte dritte Ausführungsform des erfindungsgemäßen Verfahrens unterscheidet sich von den beiden vorhergehenden dadurch, dass bei der Upgrade-Prozedur auf die WebSockets-Verbindung mit den Nachrichten N31 und N32 ein anderer WebRTC-Signalisierungstyp, nämlich Nr. 8, sowie ein Textstring übermittelt wird, der den Start von SDP in den Signalisierungsnachrichten N33 und N34 kennzeichnet. Daher erkennt die Firewall 40, dass ein unbekanntes Protokoll mit eingebettetem SDP benutzt wird, und sucht nach dem Textstring "Here_starts_SDP" und öffnet diejenigen RTP-Ports, die im SDP enthalten waren. Dies führt dazu, dass in dem neu eingeführten Header-Feld als Signalisierungstyp die Nr. 8 genannt ist und der Textstring "Here_starts_SDP" in der "Browser Request" gemäß Infokasten 13 enthalten ist. Auch die entsprechende Antwort des WebRTC-Servers 30 an den WebRTC-Client 20 enthält somit (in der Nachricht N34) den vereinbarten Signalisierungstyp 8 sowie die Bestätigung, dass die Signalisierung mit dem SDP_Start_String durchgeführt wird. Statt des als Beispiel genannten Textstrings "Here_starts_SDP" könnte auch eine andere zufällige Zeichenfolge ausreichender Länge verwendet werden, sofern sie nicht im Rest der Nachricht nochmals vorkommt.

Es ist festzuhalten, dass die unter Bezug auf die dargestellten Ausführungsformen beschriebenen Merkmale der Erfindung, wie beispielsweise die Art und Ausgestaltung der verwendeten Clients, Server, Verbindungen und Protokolle, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

### Bezugszeichenliste

- 10: = Telekommunikationsanordnung
- 11-14: = Infokasten
- 20: = (Web)RTC-Client
- 22: = Browser
- 24: = Funktionseinheit
- 30: = (Web)RTC-Server
- 32: = Web-Server
- 34: = WebSockets-Server
- 40: = Firewall
- 42: = Steuereinrichtung
- 90: = Datenträger
- 92: = Computerprogrammprodukt
- N01-N94: = Nachricht
- P1-P3: = Port

## Patentansprüche

1. Verfahren zum Traversieren einer Application-Layer-Gateway-Firewall (40) beim Aufbau einer RTC-Kommunikationsverbindung zwischen einem RTC-Client (20) und einem RTC-Server (30) unter Verwendung eines proprietären RTC-Signalisierungsprotokolls, wobei die Firewall (40) keine spezifischen Kenntnisse des proprietären RTC-Signalisierungsprotokolls besitzt,
umfassend folgende Schritte:
- der RTC-Client (20) und der RTC-Server (30) verhandeln beim Aufbau der RTC-Kommunikationsverbindung, welche der Ports (P1, P2, P3) der Firewall (40) für die über die RTC-Kommunikationsverbindung auszutauschenden Datenpakete benötigt werden, indem sie als Bestandteil des proprietären RTC-Signalisierungsprotokolls mindestens ein standardisiertes Nachrichtenelement verwenden, mit dem diejenigen Informationen auffindbar sind, welche die zu verwendenden Ports betreffen,
- die Firewall (40) erfasst beim Aufbau der RTC-Kommunikationsverbindung mit Hilfe des standardisierten Nachrichtenelements, welche der Ports (P1, P2, P3) der Firewall (40) von dem RTC-Client (20) und dem RTC-Server (30) für die über die RTC-Kommunikationsverbindung auszutauschenden Datenpakete als benötigt verhandelt wurden, und
- die Firewall (40) öffnet und schließt die benötigten Ports (P1, P2, P3) dynamisch nach Maßgabe des Ergebnisses der Verhandlung.

2. Verfahren nach Anspruch 1,
**dadurch gekennzeichnet, dass** für die Verhandlung der benötigten Ports (P1, P2, P3) eine definierte Signalisierungsprotokollvariante verwendet wird, die nach dem Aufbau einer Signalisierung-Transportverbindung zwischen dem RTC-Client (20) und dem RTC-Server (30) über RTC-Signalisierung ausgetauscht wird.

3. Verfahren nach Anspruch 2,
**dadurch gekennzeichnet, dass** der Austausch der Signalisierungsprotokollvariante als Teil einer Upgrade-Prozedur von einer HTTP-Verbindung auf eine WebSockets-Verbindung stattfindet.

4. Verfahren nach Anspruch 3,
**dadurch gekennzeichnet, dass** für den Austausch der Signalisierungsprotokollvariante Erweiterungen in dem WebSockets-Protokoll, insbesondere ein definiertes Feld in einem Header, verwendet werden.

5. Verfahren nach Anspruch 2,
**dadurch gekennzeichnet, dass** der Austausch der Signalisierungsprotokollvariante erst nach Durchführung einer Upgrade-Prozedur von einer HTTP-Verbindung auf eine WebSockets-Verbindung unter Verwendung eines eigenen Protokolls stattfindet.

6. Computerprogrammprodukt (92) zur Durchführung des Verfahrens gemäß einem der vorhergehenden Ansprüche.

7. Maschinenlesbarer Datenträger (90) mit darauf gespeichertem Computerprogrammprodukt (92) gemäß Anspruch 6.

8. Telekommunikationsanordnung (10), bei der das Traversieren einer Application-Layer-Gateway-Firewall (40) beim Aufbau einer RTC-Kommunikationsverbindung zwischen einem RTC-Client (20) und einem RTC-Server (30) unter Verwendung eines proprietären RTC-Signalisierungsprotokolls möglich ist, wobei die Firewall (40) keine spezifischen Kenntnisse des proprietären RTC-Signalisierungsprotokolls besitzt, umfassend:
- einen RTC-Client (20),
- einen RTC-Server (30), und
- eine Firewall (40) mit einer Mehrzahl von Ports (P1, P2, P3),
**dadurch gekennzeichnet, dass** die Firewall (40) eine Steuereinrichtung (42) zum Durchführen des Verfahrens gemäß einem der Ansprüche 1 bis 5 aufweist.

## Claims

1. A method for traversing an application layer gateway firewall (40) during the establishment of an RTC communication connection between an RTC client (20) and an RTC server (30) using a proprietary RTC signaling protocol, wherein the firewall (40) does not have any specific knowledge of the proprietary RTC signaling protocol,
comprising the following steps:
- the RTC client (20) and the RTC server (30) negotiate, during the establishment of the RTC communication connection, which of the ports (P1, P2, P3) of the firewall (40) are required for the data packets to be exchanged via the RTC communication connection, by using as a component of the proprietary RTC signaling protocol at least one standardized message element, using which the items of information which relate to the ports to be used can be found,
- the firewall (40) detects, during the establishment of the RTC communication connection with the aid of the standardized message element, which of the ports (P1, P2, P3) of the firewall (40) were negotiated as required by the RTC client (20) and the RTC server (30) for the data packets to be exchanged via the RTC communication connection, and
- the firewall (40) opens and closes the required ports (P1, P2, P3) dynamically according to the result of the negotiation.

2. The method as claimed in claim 1,
**characterized in that**, for the negotiation of the required ports (P1, P2, P3), a defined signaling protocol variant is used, which is exchanged via RTC signaling after the establishment of a signaling transport connection between the RTC client (20) and the RTC server (30).

3. The method as claimed in claim 2,
**characterized in that** the exchange of the signaling protocol variant takes place as part of an upgrade procedure from an HTTP connection to a WebSockets connection.

4. The method as claimed in claim 3,
**characterized in that** expansions in the WebSockets protocol, in particular a defined field in a header, are used for the exchange of the signaling protocol variant.

5. The method as claimed in claim 2,
**characterized in that** the exchange of the signaling protocol variant only takes place after carrying out an upgrade procedure from an HTTP connection to a WebSockets connection using a separate protocol.

6. A computer program product (92) for carrying out the method as claimed in any one of the preceding claims.

7. A machine-readable data carrier (90) having a computer program product (92) as claimed in claim 6 stored thereon.

8. A telecommunications assembly (10), in which the traversal of an application layer gateway firewall (40) is possible during the establishment of an RTC communication connection between an RTC client (20) and an RTC server (30) using a proprietary RTC signaling protocol, wherein the firewall (40) does not have any specific knowledge of the proprietary RTC signaling protocol, comprising:
- an RTC client (20),
- an RTC server (30), and
- a firewall (40) having a plurality of ports (P1, P2, P3), **characterized in that** the firewall (40) has a control unit (42) for carrying out the method as claimed in any one of claims 1 to 5.

## Revendications

1. Procédé pour traverser un pare-feu (40) de passerelle de couche d'application lors de l'établissement d'une liaison de communication RTC entre un client RTC (20) et un serveur RTC (30) en utilisant un protocole de signalisation RTC propriétaire, le pare-feu (40) ne possédant aucune connaissance spécifique du protocole de signalisation RTC propriétaire, comprenant les étapes suivantes :
- le client RTC (20) et le serveur RTC (30) négocient en établissant la liaison de communication RTC, lesquels des ports (P1, P2, P3) du pare-feu (40) sont nécessaires pour les paquets de données à échanger via la liaison de communication RTC, dans la mesure où ils utilisent, en tant qu'éléments du protocole de signalisation RTC propriétaire, au moins un élément de message standardisé avec lequel les informations, qui concernent les ports à utiliser, sont trouvables,
- le pare-feu (40) saisit, à l'établissement de la liaison de communication RTC à l'aide de l'élément de message standardisé, lesquels des ports (P1, P2, P3) du pare-feu (40) ont été négociés par le client RTC (20) et le serveur RTC (30) comme nécessaires pour les paquets de données à échanger via la liaison de communication RTC, et
- le pare-feu (40) ouvre et ferme les ports nécessaires (P1, P2, P3) de manière dynamique en fonction des résultats de la négociation.

2. Procédé selon la revendication 1,
**caractérisé en ce que**, pour la négociation des ports nécessaires (P1, P2, P3), une variante définie de protocole de signalisation, qui est échangée après l'établissement d'une liaison de transport de signalisation entre le client RTC (20) et le serveur RTC (30) via une signalisation RTC, est utilisée.

3. Procédé selon la revendication 2,
**caractérisé en ce que** l'échange de la variante de protocole de signalisation a lieu en tant que partie d'une procédure de mise à niveau d'une connexion HTTP vers une liaison WebSocket.

4. Procédé selon la revendication 3,
**caractérisé en ce que** des enrichissements dans le protocole WebSocket, notamment un champ défini dans un en-tête, sont utilisés pour l'échange de la variante de protocole de signalisation.

5. Procédé selon la revendication 2,
**caractérisé en ce que** l'échange de la variante de protocole de signalisation a lieu seulement après avoir effectué une procédure de mise à niveau d'une connexion HTTP vers une liaison WebSocket en utilisant un propre protocole.

6. Produit de programme informatique (92) en vue de mettre en oeuvre le procédé conformément à l'une des revendications précédentes.

7. Support de données (90) lisible par machine avec un produit de programme informatique (92) enregistré dessus conformément à la revendication 6.

8. Dispositif de télécommunication (10), pour lequel la traversée d'un pare-feu (40) de passerelle de couche d'application est possible lors de l'établissement d'une liaison de communication RTC entre un client RTC (20) et un serveur RTC (30) en utilisant un protocole de signalisation RTC propriétaire, le pare-feu (40) ne possédant aucune connaissance spécifique du protocole de signalisation RTC propriétaire, comprenant :
- un client RTC (20),
- un serveur RTC (30) et
- un pare-feu (40) avec une multitude de ports (P1, P2, P3), **caractérisé en ce que** le pare-feu (40) présente un dispositif de commande (42) en vue de mettre en oeuvre le procédé conformément à l'une quelconque des revendications 1 à 5.
